# EUROPEAN PATENT APPLICATION

(11) **EP 2 804 392 A1**
(43) Date of publication of application: **19.11.2014**
(21) Application number: 13168306.2
(22) Date of filing: 17.05.2013
(51) Int. Cl.: H04Q 1/14

(54) **Termination module**

(71) Applicant: 3M Innovative Properties Company, Saint Paul, Minnesota 55133-3427 (US)
(72) Inventor: Metral, Guy, 74300 Cluses (FR)
(74) Representative: Müller, Bruno

(57) **Abstract**

The invention relates to a termination module 1 for a telecommunication assembly, comprising
- a housing 2,
- at least one group of contacts for connecting wires therewith, the group being defined by comprising contacts for one subscriber,
- the group of contacts comprising at least one first contact 4 adapted to transmit line signals, at least one second contact 6 adapted to transmit POTS signals and at least one third contact 9 adapted to transmit data signals, wherein
- the termination module also comprises an activator 13 , which is accessible from the outside of the housing and which acts on at least the data contact of one group such that at least a part of the data contact may be moved from a first position into a second position relative to the housing.

## Description

The invention relates to a termination module for a telecommunication assembly with a housing and at least one group of contacts for connecting wires therewith.

In the field of telecommunications, numerous customers or subscribers are connected with a switch of a telecommunications company via telecommunications lines or wires. The switch is also called an exchange. Between a subscriber and the switch, sections of telecommunications lines are connected with telecommunications modules. The telecommunications modules establish an electrical connection between a wire which is attached to the telecommunications module at a first side, and another wire which is attached to the telecommunications module at a second side. Plural telecommunications modules can be put together at a distribution point, such as a main distribution frame, an intermediate distribution frame, an outside cabinet or a distribution point located, for example, in an office building or on a particular floor of an office building. To allow flexible wiring, some telecommunications lines are connected with first telecommunications modules in a manner to constitute a permanent connection. Flexibility is realized by so-called jumpers, which flexibly connect contacts of the first telecommunications module with contacts of a second telecommunications module. These jumpers can be changed when a person moves e.g. within an office building to provide a different telephone (i.e. a different telephone line) with a certain telephone number, which the relocated person intends to keep.

For a couple of years now, ADSL-technology has spread widely in the field of telecommunications; this technology allows at least two different signals to be transmitted on a single line. This is achieved by transmitting the different signals at different frequencies along the same line. The signals are combined at a particular point in the telecommunications line and split at another point. In particular, at the subscriber side, voice and data signals, which are separate, are combined and sent to a central office of the telecommunications company via the same line. In the central office the combined signal is split. For the transmission of voice and data signals to the subscriber, separate voice and data signals are combined at the central office, sent to the subscriber and split at the subscriber side. After splitting the signal, the so-called POTS (plain old telephone service) signal can be used to transmit voice signals. The remaining part of the split signal can be used to transmit data. So-called splitters, which are used to split or combine the signal, can generally be arranged at any distribution point.

Recently, end users can also access data and voice signals over one IP (Internet Protocol) access, which transmits both digital voice and high speed data signals. Summarizing the above, there are basically three ways to provide end users with telecommunications services: POTS for voice signals only; ADSL or xDSL service for analogue or digital voice signals and high speed data signals; IP service for digital voice signals and high speed data signals.

WO 01/97532 A2 discloses a telecommunications assembly for a Central Office, that is able to process voice and data signals of good quality using the same network. The telecommunications assembly comprises termination modules with a xDSL splitters being connected to the rear side of the termination module.

WO 2012/064431 A1 discloses a termination module for a telecommunication assembly with a housing and group of contacts for connecting wires thereto, wherein the group of contacts comprises at least one first contact adapted to transmit line signals, at least one second contact adapted to transmit POTS signals and at least one third contact adapted to transmit data signals. Depending on the demands of an end user and the therefore required network configuration, different contacts need to be electrically connected inside of the module.

Since the network technology is further developing, there is still a need for an even more flexible termination module for a telecommunication assembly. For example there is a need to provide a simple way for modifying an telecommunication assembly to access not only to POTS services and ADSL services but also to IP services and to be able to quickly apply from the subscriber requested changes to the system.

The present invention provides such a flexible termination module by providing a termination module for a telecommunication assembly with the following technical features:
- a housing,
- at least on group of contacts for connecting wires therewith, the group being defined by comprising contacts for one subscriber,
- the group of contacts comprising at least one first contact adapted to transmit line signals, at least one second contact adapted to transmit POTS signals and at least one third contact adapted to transmit data signals,
- wherein the termination module also comprises an activator, which is accessible from the outside of the housing and which acts on at least the data contact of one group such that at least a part of the data contact may be moved from a first position into a second position relative to the housing.

The present invention provides a termination module which provides a very simple way of adapting the module to the needs and/or wishes of each subscriber. By just bringing the activator from one position into another position the data contact is moved and different configurations of the termination module are possible.

The termination module according to the present invention provides a housing. The housing may be made out of plastic or any other suitable material allowing electrical insulation. The housing can be constituted by one or more components.

The housing serves to accommodate contacts, to which telecommunication lines/wires or electronic components are connectable. The housing can have specific structures for positioning the contacts therein. Moreover, the housing can comprise one or more cavities or receiving spaces, which are adapted to accommodate contacts and/or objects such as one or more electronic components or functional modules or parts thereof.

The contacts present in the housing of the termination module according to the invention are organized in groups of contacts, wherein one group is defined as comprising all contacts that belong to one subscriber. Each group comprises at least one first contact adapted to transmit line signals, which are the signals from and to the subscriber. Each group further comprises at least one second contact adapted to transmit POTS (plain old telephone service) signals and each group comprises at least one third contact adapted to transmit data signals.

Finally, the termination module according to the invention provides an activator. The activator is positioned to be accessible from the outside of the housing by any kind of means, such as for example by special tools and/or by hand etc., to be moved from one position into another position. The activator may be made out of plastic, as the housing. It may also be made out of any other kind of suitable material that is providing electrical insulation.

The activator acts on the data contact in such a way, that at least parts of the data contact are moved from a first position into a second position. Therefore the activator and the data contact need to be directly or indirectly mechanically connected with each other. The data contact may be fixedly arranged in the housing with one end, for example the end, that is adapted for wires to be connected therewith, and it may be movable relative to the housing at another end, for example the end, that is directed towards at least one of the first and the second contacts. The movement of the other end may be a rotation around the fixed end.

According to one embodiment of the present invention, the third data contact is not electrically connected with any of the other contacts of its group in the first position. When the data contact is not connected with any of the other contacts, it is not possible to directly transmit any kind of signals from the data contact to any of the other contacts. With such a configuration, the subscriber may be provided with, for example, POTS access for analogue voice signals. When additional functional modules are used, such as for example a plug with a printed circuit board (pcb) and functional elements, the subscriber may also be provided with, for example, ADSL or xDSL access for analogue or digital voice and high speed data. In this case the functional module needs to provide a splitter assembly as well as means for connecting line, POTS and data contacts with each other.

According to another embodiment of the present invention, the third data contact is electrically connected with any of the other contacts of its group in the second position. When the data contact is connected with any of the other contacts, it is possible to transmit data signals from the data contacts to any of the other contacts, for example to the line contact. This configuration allows the subscriber to use for example IP access for digital voice and high speed data.

The data contact may be mounted within the housing such that at least one end of the contact is moved from a first position into a second position.

The third contact or the data contact may be made out of sheet metal. Sheet metal is commonly used for contacts within termination modules within the telecommunications area. Contacts made out of sheet metal are reasonable with respect to production costs, because they may be stamped out of the sheet metal in only one step. In addition, they provide a resiliency or springiness that allows an easy way of bringing at least one end of the third contact from a first position into a second position, and back into the first position.

The first and the second contacts or the line and the POTS contacts are also made out of sheet metal. The advantages are the same as the once named above for the data contact. The resiliency or springiness allows further connecting first and second contacts at a disconnection point.

According another embodiment of the invention, the first and second contact of one group (line and POTS contact) may be connected with each other within the housing at a disconnection point. A disconnection point allows to easily integrate any kind of electronic components into the termination module, e.g. any kind of plugs, like for example protection plugs for over voltage or over current , plugs with splitter functionalities or plugs with test functionalities etc. A disconnection point also provides an easy way of providing a live line service, which is the possibility for the subscriber to still be able to use POTS, when for example the xDSL access is interrupted for any kind of reasons.

According to yet another embodiment of the invention, the activator may be slideably mounted on the outside of the housing and may act on a movable end of the third data contact, thereby bending this end. The activator may also be slideably positioned on the inside of the housing. The movement of the activator may be a linear movement or a movement along any kind of curve. The movement may also be a movement parallel to an outer surface of the housing or it may be a movement which is oriented perpendicular to the outer surface of the housing.

Each group of contacts may comprise a separate activator. Such an embodiment provides the possibility of adapting each group of contacts according to the respective needs of each customer or group of customers. The way of adapting the groups of contacts is as simple as bringing the activator from one position into another position and adding a plug with the according functions, if necessary. Providing one activator for all groups of contacts within one termination module provides the possibility to change the configurations of all groups within one termination module at once, which may also be an advantage depending on the application of the terminal module.

The invention will now be described in more detail with reference to the following Figures exemplifying particular embodiments of the invention:
- Fig. 1: is a cross-sectional view of one embodiment of a termination module according to the invention with the activator being in a first position;
- Fig. 2: is a cross-sectional view of the termination module according to Figure 1 with the activator being in the first position and a plug being inserted into the termination module;
- Fig. 3: is a cross-sectional view of the termination module according to Figure 1 with the activator being in a second position;
- Fig. 4: is a view on a main side of the termination module according to Figure 1, showing activators in different positions, and
- Fig. 5: is a cross-sectional view of another embodiment of a termination module according to the invention with the activator being in a first position.

Herein below various embodiments of the present invention are described and shown in the drawings wherein like elements are provided with the same reference numbers.

Directional terms such as "top", "bottom", "right", "left" and others are used with reference to the orientation of the Figure(s) being described.

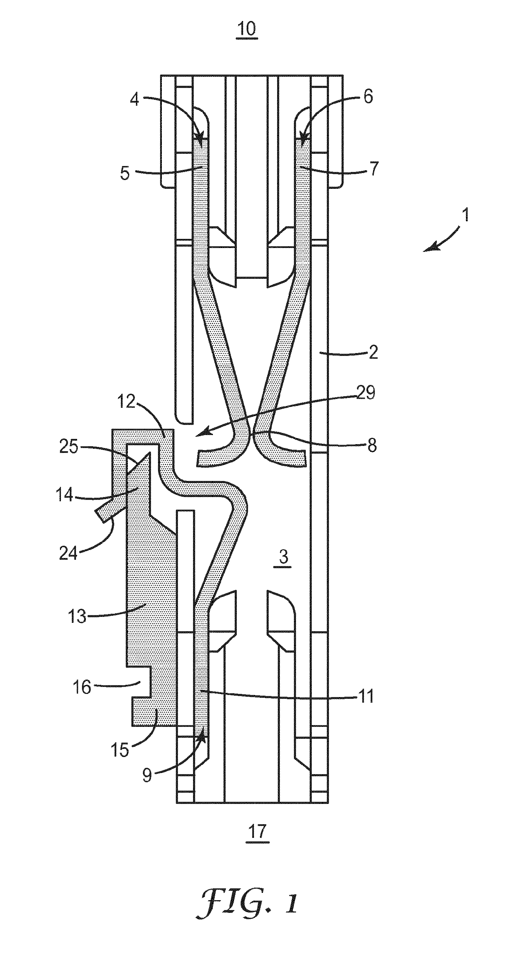

**Figure 1** is a cross-sectional view of a termination module for a telecommunication assembly 1 according to one exemplary embodiment of the invention. The cross-section is selected such that all three contacts, that belong to one group of contacts are shown. Within this group, all contacts are assigned to one subscriber. The termination module 1 comprises a housing 2. The housing has in this cross-section a basically rectangular shape. It provides a space 3 inside for carrying contacts. It also provides specific structures for positioning the contacts therein. The group of contacts shown in Figure 1 provides a first contact 4 that is adapted to transmit line signals. In order to be able to do so, the first contact may provide an insulation displacement contact (IDC) structure on one end 5, which allows to connect wires to the first contact 4. The group of contacts also provides a second contact 6 which is adapted to transmit POTS signals. In order to be able to do so, the second contact may also provide an IDC structure on one end 7, which allows to connect wires to the second contact 6. First contact 4 and second contact 6 are arranged in the housing so that they are mechanically and electrically connected with each other at a disconnection point 8. The IDC ends 5 and 7 are arranged at the front end 10 of the housing 2.

The embodiment shown in Figure 1 also provides a third contact 9 which is adapted to transmit data signals. In order to be able to do so, the third contact may also provide an IDC structure on one end 11, which allows to connect wires to the third contact. The third contact 9 is fixedly arranged in the housing with its end 11, where the IDC is located. The IDC end 11 of the third contact 9 is arranged at a rear end 17 of the housing. The other end 12 of the third contact 9 is directed towards the disconnection point 8 of the first 4 and the second contact 6 inside the housing 2.

Figure 1 also shows an activator 13. The activator 13 is positioned outside of the housing 2 and extends with its rectangular shape perpendicular to the surface of a main side of the housing 2. A first end 14 of the activator 13 is positioned such that it interacts with the third contact 9 of the terminal module 1. The interaction between the third contact 9 and the activator 13 will be described below. A second opposite end 15 is shaped such, that it may be easily activated by hand. It therefore provides a recess 16.

As can be seen from Figure 1, the third contact 9 does neither contact the first 4 nor the second contact 6 of the termination module 1. The activator 13 is in a position, where it is in direct mechanical contact with the third contact 9, especially with a u-shaped portion of the end 12, which is directed towards the first 4 and the second 6 contact. The u-shaped portion of the contact 9 extends through an opening in the housing 2, thereby providing the possibility of directly interacting with the activator 13. When the activator 13 is brought in this position, shown in Figure 1, it pulls the end 12 from the third contact 9 in a direction out of the housing and thereby away from the first 4 and second 6 contact such that the third contact 9 does not touch any of the first and second contacts and such that no signals may be transmitted from and to the third data contact 9 (first position of the third (data) contact 9). The configuration shown in Figure 1 allows to provide a subscriber with a POTS service. Signals may be transmitted from the POTS contact 6 to the line contact 4 and the other way around. Wires will only be connected to the first line contact 4 and the second POTS contact 6.

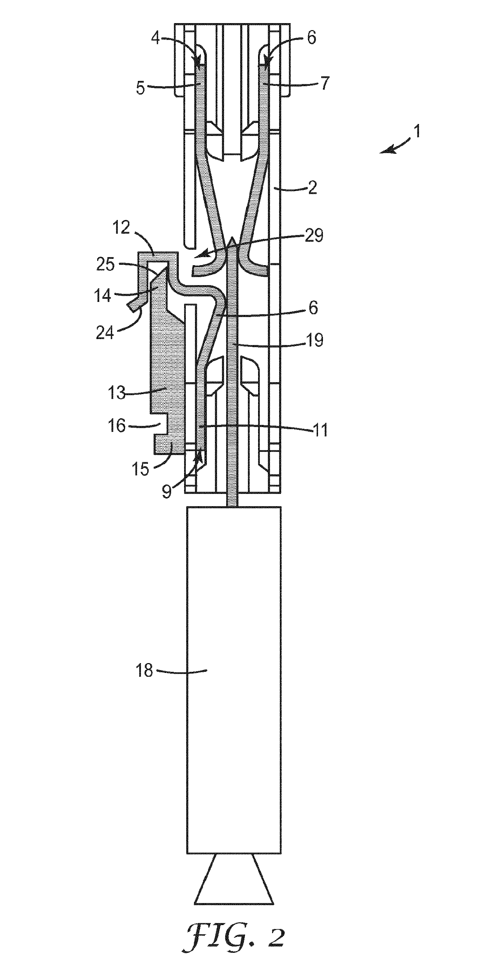

Figure 2 is a cross-sectional view of the termination module 1 according to Figure 1. The termination module 1 is shown in the same configuration, which means that the activator 13 of the termination module 1 is shown in the same position as in Figure 1. Therefore, the third contact 9, which is the data contact, is not electrically connected with either the first contact 4 or the second contact 6. The embodiment shown in Figure 2 differs from that shown in Figure 1 in that a plug 18 is inserted into the termination module 1 from the rear side 17. The plug 18 provides a printed circuit board (pcb) interface 19 with means for electrically connecting the first 4, second 6 and third 9 contacts.

When the plug 18 provides splitter functionalities, the pcb interface 19 connects the first (line) contact 4, the second (POTS) contact 6 and the third (data) contact 9 with the electronic components in the plug 18, thereby providing ADSL or xDSL service to the subscriber. Signals may be transmitted from and to all three contacts of the group through the splitter. Wires will be connected to all three contacts 4, 6, and 9.

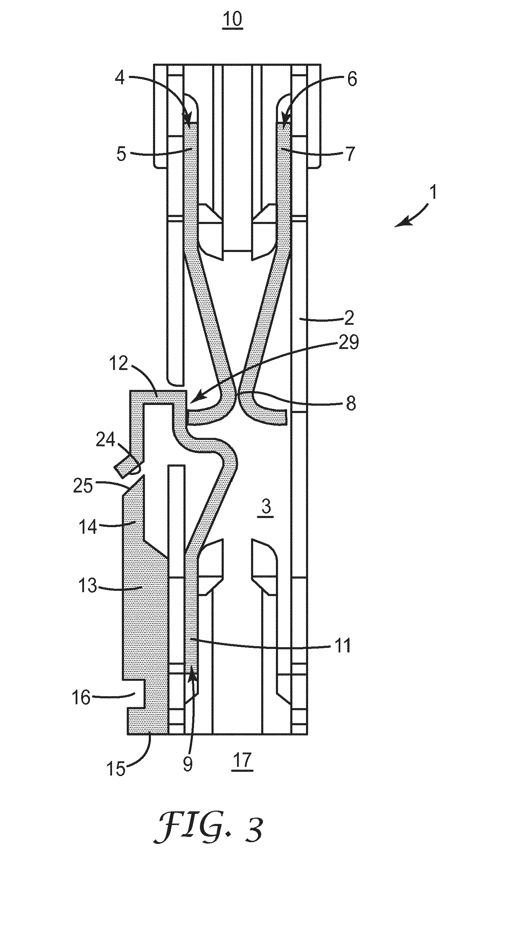

**Figure 3** is a cross- sectional view of the termination module 1 according to Figure 1. The termination module 1 is shown in another configuration as in Figure 1. The activator 13 is shown in another, lower position as in Figure 1. To bring the activator 13 from the position shown in Figures 1 and 2 into the position shown in Figure 3, the activator 13 needs to be pulled down into the direction of the rear end 17 of the termination module 1. By pulling the activator 13 into this direction, the engagement between the activator 13 and the third contact 9 is opened. Due to the resiliency of the third contact 9, it moves back inside of the housing 2 until it hits the first contact 4, thereby providing an electrical connection between the first 4 and the third contact 9 (second position of the third contact).

This configuration may be used for an application, where only IP access is provided to the subscriber. Under these circumstances, the plug 18 with the splitter may be removed and the POTS contact is no longer needed. Digital signals (voice and high speed data) may be transmitted from the first line contact 4 to the third data contact 9 and the other way around. The free second POTS contact may be used for accessing the connection for any other kind of activities, such as for example for testing etc.. It may as well stay unused. It could be used for network migration, e.g. preparation of a second network without any interaction on the first network.

In order to enable the engagement of the activator 13 with the free end 12 of the third (data) contact 9, activator 13 and free end 12 provide a corresponding tapered region 24, 25 (see Figures 1 to 3).

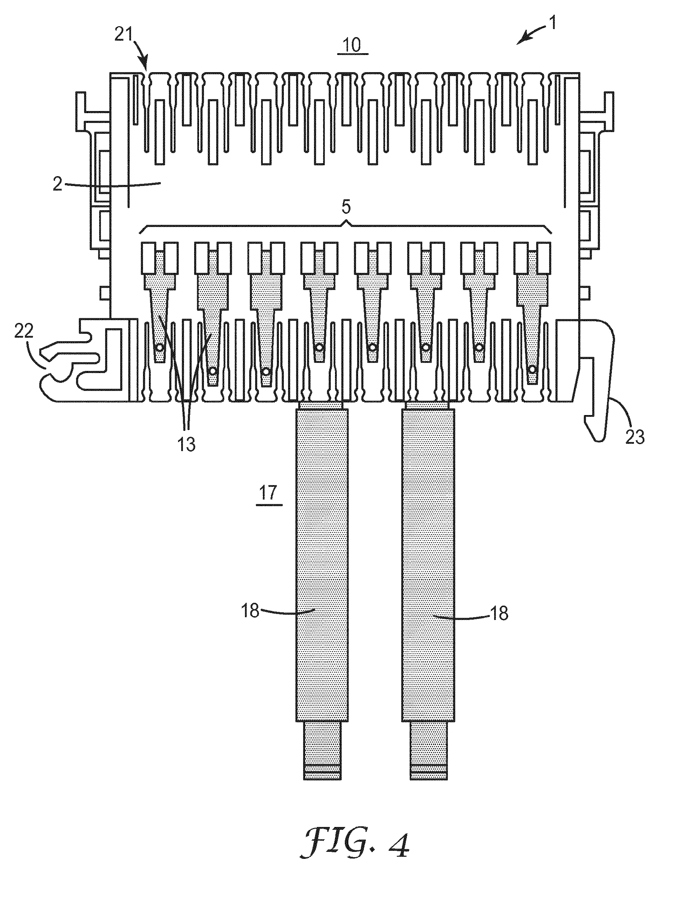

**Figure 4** is a view of a main side of the termination module 1 according to Figure 1. It shows the housing 2 with the front side 10 and the rear side 17. Front and rear side of the housing 2 provide slots 21 for the wires to be inserted in order to be connected to the IDC structures of the contacts. The housing 2 may also provide a hinge structure 22 for rotating the housing relative to a support structure (not shown). The housing 2 may further provide a fixing means 23 for fixing the housing 2 to the support structure.

Figure 4 shows an eight pair termination module 1 with eight groups of contacts for eight subscribers. For first, third forth, fifth, sixth and seventh group of contacts the activator 13 is brought in an upper first position. For the second, third and eighth group of contacts the activator is brought in a lower second position. The following table shows the positions of the activator 13 and the provided services for the subscriber:

| Group | Position | Service provided |
|---|---|---|
| First | First (upper) | POTS |
| Second | Second (lower) | IP |
| Third | Second (lower) | IP |
| Forth | First (upper) | xDSL |
| Fifth | First (upper) | POTS |
| Sixth | First (upper) | xDSL |
| Seventh | First (upper) | POTS |
| Eighth | Second (lower) | IP |

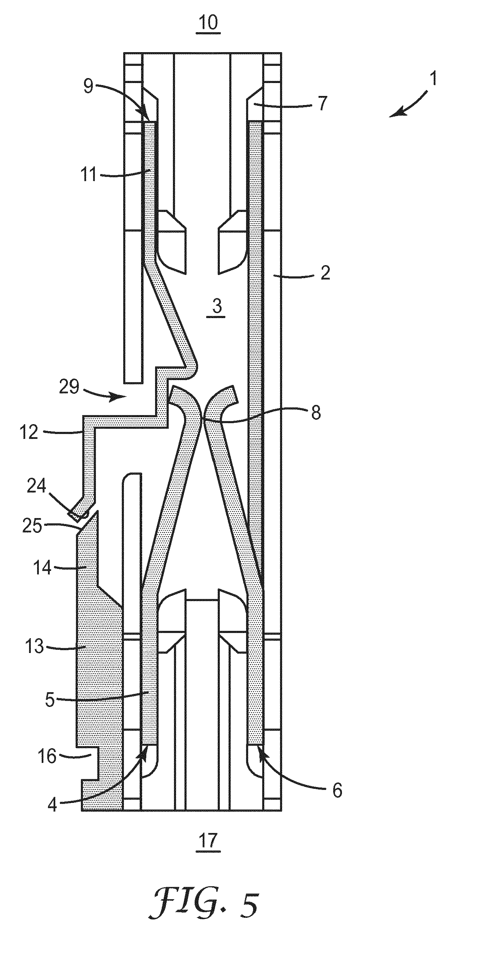

**Figure 5** is a cross-sectional view of a termination module for a telecommunication assembly 1 according to another exemplary embodiment of the invention. The cross-section is selected such that all three contacts, that belong to one group of contacts are shown. Within this group, all contacts are assigned to one subscriber. The termination module 1 comprises a housing 2. The housing has in this cross-section a basically rectangular shape. It provides a space 3 inside for carrying contacts. It also provides specific structures for positioning the contacts therein. The group of contacts shown in Figure 5 provides a first contact 4 that is adapted to transmit line signals. In order to be able to do so, the first contact may provide an insulation displacement contact (IDC) structure on one end 5, which allows to connect wires to the first contact 4. The group of contacts also provides a second contact 6 which is adapted to transmit POTS signals. In order to be able to do so, the second contact may also provide an IDC structure on one end 7, which allows to connect wires to the second contact 6. First contact 4 and second contact 6 are arranged in the housing so that they are mechanically and electrically connected with each other at a disconnection point 8. The IDC end 5 of the line contact 4 is arranged at the rear end 17 of the housing 2 and the IDC end 7 of the POTS contact 6 is arranged at the front end 10 of the housing 2. The configuration of the IDC ends of the contacts 4 and 6 is flexible and can be adapted to the requirements of the telecommunications company.

The embodiment shown in Figure 5 also provides a third contact 9 which is adapted to transmit data signals. In order to be able to do so, the third contact may also provide an IDC structure on one end 11, which allows to connect wires to the third contact. The third contact 9 is fixedly arranged in the housing with its end 11, where the IDC is located. The IDC end 11 of the third contact 9 is arranged at the front end 10 of the housing. The other end 12 of the third contact 9 is directed towards the disconnection point 8 of the first contact 4 and the second contact 6 inside the housing 2.

Figure 5 also shows an activator 13. The activator 13 is positioned outside of the housing 2 and extends with its rectangular shape perpendicular to the surface of a main side of the housing 2. A first end 14 of the activator 13 is positioned such that it interacts with the third contact 9 of the terminal module 1. The interaction between the third contact 9 and the activator 13 will be described below. A second opposite end 15 is shaped such, that it may be easily activated by hand. It therefore provides a recess 16.

As can be seen from Figure 5, the third contact 9 does neither contact the first contact 4 nor the second contact 6 of the termination module 1. The activator 13 is in a position, where it is in direct mechanical contact with the third contact 9, especially with its end 12. The end 12 of the contact 9 extends through an opening 29 in the housing 2, thereby providing the possibility of a direct interaction between free end 12 of contact 9 with the activator 13. When the activator 13 is brought in the position, shown in Figure 5, it pulls the end 12 from the third contact 9 in a direction out of the housing and thereby away from the first 4 and second 6 contact such that the third contact 9 does not touch any of the first and second contacts and such that no signals may be transmitted from and to the third data contact 9 (first position of the third (data) contact 9). The configuration shown in Figure 5 allows to provide a subscriber with a POTS service. Signals may be transmitted from the POTS contact 6 to the line contact 4 and the other way around. Wires will only be connected to the first line contact 4 and the second POTS contact 6. Figure 5 therefore shows a position of contact 9 that is comparable with the one shown in Figure 1. In the position shown in Figure 5 it is also possible to insert a plug with the above described functionalities (not shown in Figure 5) into the termination module 1 from the rear side 17. Of course, the activator of Figure 5 may also be moved in a position shown in Figure 3, thereby allowing contact 9 to get in touch with the line contact 7 and providing the possibility of IP access over the data contact 9 for the subscriber.

## Claims

1. A termination module (1) for a telecommunication assembly, comprising:
- a housing (2),
- at least one group of contacts for connecting wires therewith, the group being defined by comprising contacts for one subscriber,
- the group of contacts comprising at least one first contact (4) adapted to transmit line signals, at least one second contact (6) adapted to transmit POTS signals and at least one third contact (9) adapted to transmit data signals,
**characterized, in that**
the termination module also comprises an activator (13), which is accessible from the outside of the housing and which acts on at least the data contact of one group such that at least a part of the data contact may be moved from a first position into a second position relative to the housing.

2. Termination module for a telecommunication assembly according to claim 1, wherein the data contact (9) is not electrically connected with any of the other contacts (4, 6) of its group in the first position.

3. Termination module for a telecommunication assembly according to claim 1 or 2, wherein the data contact (9) is electrically connected with any of the other contacts (4, 6) of its group in the second position.

4. Termination module for a telecommunication assembly according to any of the preceding claims, wherein the data contact (9) is mounted within the housing (2) such that at least one end (12) of the contact is moved from the first position into the second position.

5. Termination module for a telecommunication assembly according to any of the preceding claims, wherein the third contact (9) is made out of bend metal.

6. Termination module for a telecommunication assembly according to any of the preceding claims, wherein the first and second contact (4, 6) of one group are made out of bend metal.

7. Termination module for a telecommunication assembly according to any of the preceding claims, wherein the first and second contact (4, 6) of one group are shaped such that they touch each other at a disconnection point (8).

8. Termination module for a telecommunication assembly according to any of the preceding claims, wherein the activator (13), which is slideably mounted on the outside of the housing (2) acts on a movable end (12) of the third contact (9) thereby bending this end.

9. Termination module for a telecommunication assembly according to any of the preceding claims, wherein each group of contacts comprises a separate activator (13).
